# EUROPEAN PATENT APPLICATION

(11) **EP 1 263 262 A2**
(43) Date of publication of application: **04.12.2002**
(21) Application number: 02011196.9
(22) Date of filing: 21.05.2002
(51) Int. Cl.: H04R 3/02

(54) **Oscillation prevention circuit**

(30) Priority: 22.05.2001 JP 2001152283; 22.06.2001 JP 2001189037
(71) Applicant: School Juridical Person of Fukuoka Kogyo Daigaku, Fukuoka (JP); Nap Enterprise Co., Ltd., Kasuya-gun, Fukuoka (JP)
(72) Inventor: Seto, Shinji, Kasuya-gun, Fukuoka (JP); Taniguchi, Yasutoshi, School Juridical Person of, Higashi-ku, Fukuoka (JP)
(74) Representative: Hughes, Andrea Michelle

(57) **Abstract**

This oscillation prevention circuit is characterized in that a charging switch circuit 11 and a transfer switch circuit 12 are provided in series between a first amplifier circuit 8 and a second amplifier circuit 9; and a control circuit 15 turning OFF the transfer switch circuit when the charging switch circuit is ON and also turning OFF the charging switch circuit when the transfer switch circuit is ON is provided to prevent the two switch circuits from being turned ON at the same time.

## Description

The present invention relates to an oscillation prevention circuit which is incorporated in a microphone amplifier for one-way communication such as a hearing aid, a microphone amplifier for the deaf-and-dumb or vocal cord-damaged people, a communication apparatus for a tourist guide, a loud speaker, a communication apparatus for an announcer, a communication apparatus for a train conductor, and a head set for an operator as well as in a transmitter-receiver for interactive communications such as a microphone amplifier for an earphone, a slave device for mobile communications like a mobile-phone, a general telephone, and a translation machine for preventing oscillation of these devices and tools.

In the conventional technology, when it is tried to collect voice and sound with a microphone and to make the voice and sound louder with a speaker or an earphone through an amplifier circuit, sometimes oscillation phenomenon may occur because a loop is formed due to electric connection including transmission of acoustic waves between the sound-collecting section and the sound-amplifying section. In a communication apparatus associated with signal transaction, when the communication apparatus is used for interactive communications, sometimes a loop may be formed due to electric connection including spatial propagation of voices and sounds between transmitter/receiver sections of the two communication apparatuses to cause oscillation phenomenon thereof. This oscillation phenomenon occurs because a loop gain in electric connection including propagation of acoustic waves becomes higher than 1, and in order to ensure that the loop gain is always not more than 1, such countermeasures are required that the sound collecting section of a microphone or the like are always kept away from a microphone amplifier of a speaker or an earphone or a microphone with sharp directivity is used in the former, or that the sound collecting section and sound amplifying section are kept away from each other like in the former or a gain in the communication apparatus be kept small in the latter. Satisfying these requirements gives rise to problems in size and weight reduction of communication apparatuses.

It is an object of the present invention to provide, for solving the problems in the conventional technology as described above, an oscillation prevention circuit which does not cause oscillation phenomenon in a microphone amplifier for one-way communication nor in a transmitter-receiver for interactive communication, and also which makes it possible to concurrently transmit and receive voice and sound especially in a transmitter-receiver for interactive communications and can ensure interactive communication under stable conditions.

To achieve the object described above, the invention provides, according to one aspect, an oscillation prevention circuit used in a microphone amplifier for one-way communication having a microphone, a first amplifier circuit, a second amplifier circuit, and a speaker or an earphone, wherein a charging switch circuit and a transfer switch circuit are provided in series between said first amplifier circuit and said second amplifier circuit; a transitional signal storage member is provided between the charging switch circuit and the transfer switch circuit; said charging switch circuit delivers a signal from the first amplifier circuit to the transitional signal storage member; said transfer switch circuit delivers the signal from the transitional signal storage member to the second amplifier circuit; and characterized in that a control circuit is provided which provides controls so that the transfer switch circuit is turned OFF when the charging switch circuit is ON and the charging switch circuit is turned OFF when the transfer switch circuit is ON to prevent both of the two switch circuits from being turned ON at the same time.

According to a second aspect, the invention provides an oscillation prevention circuit used in a transmitter-receiver for interactive communication having a transmitter section comprising a microphone, a first amplifier circuit, a second amplifier circuit and a receiver section comprising a third amplifier circuit, a fourth amplifier circuit, and a speaker, wherein a charging switch circuit and a transfer switch circuit are provided in series between the first and second amplifier circuits, or between the third and fourth amplifier circuits; a transitional signal storage member is provided between the charging switch circuit and the transfer switch circuit; said charging switch circuit delivers a signal from the first amplifier circuit or the third amplifier circuit to the transitional signal storage member; said transfer switch circuit delivers a signal from the transitional signal storage member to the second amplifier circuit or the fourth amplifier circuit; and characterized in that a control circuit is provided which provides controls so that the transfer switch circuit is turned OFF when the charging switch circuit is ON and the charging switch circuit is turned OFF when the transfer switch circuit is ON to prevent both of the two switch circuits from being turned ON at the same time.

The oscillation prevention circuit according to the present invention has the configuration as described above, so that oscillation phenomenon never occurs even in the state where a microphone and a speaker or an earphone are very close to each other and generally oscillation occurs. As a result, it becomes very easy to design electronic equipment such as a hearing aid or a mobile-phone in which positional relations between the microphone and the speaker or earphone are put under very strict conditions in the conventional technology. Further a loop gain control for preventing oscillation is not required, so that there is no limit in sound volume control in the microphone amplifier. In addition, the configuration is very simple, so that the production cost is relatively low.

Preferred embodiments will now be described, by way of example only, with reference to the drawings.
Fig. 1 is a perspective view showing a microphone amplifier according to a first embodiment of the present invention;
Fig. 2 is a block diagram showing an oscillation prevention circuit and other related components incorporated in the microphone amplifier;
Fig. 3 is a view showing switch timing for a charging switch circuit as well as for a transfer switch circuit;
Fig. 4 is a block diagram showing an oscillation prevention circuit and other related components incorporated in a transmitter-receiver according to a second embodiment of the present invention;
Fig. 5 is a view showing switch timing for the charging switch circuit as well as for the transfer switch circuit;
Fig. 6 is a longitudinal front cross-section showing an example in which the oscillation prevention circuit shown in Fig. 4 is incorporated in a earphone microphone;
Fig. 7 is a longitudinal side cross-section taken along the line A-A in Fig. 6;
Fig. 8 is a longitudinal cross-section showing the state where the earphone is set in a user's ear; the state seen from the user's front side
Fig. 9 is a view showing an example where a chain with a ear-hung clip is set over a user's ear with the clip fixed on the back side of the ear;
Fig. 10 is a longitudinal front cross-section showing an example where a hearing aid function is added to the earphone microphone shown in Fig. 6;
Fig. 11 is a side view showing the side opposite to the inserting side;
Fig. 12 is a longitudinal cross-section showing the state of the earphone microphone set in a user's ear, the state seen from the user's front side; and
Fig. 13 is a view showing an example a chain with a ear-hung clip is set over a user's ear with the clip fixed on the back side of the ear.

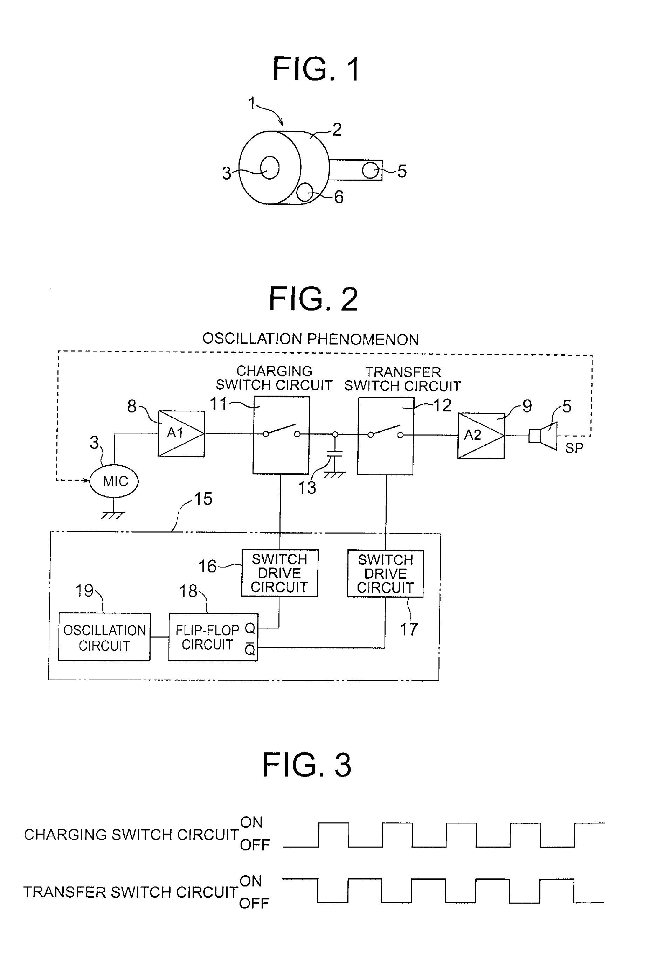

The first embodiment of the present invention is described below with reference to the related drawings. In the first embodiment, the present invention is applied to an microphone amplifier for amplifying weak audio signals and making the sound louder with a speaker. The environment in which this microphone amplifier is used is generally as shown in Fig. 1, and in this figure, designated at the reference numeral 1 is an microphone amplifier which is partially or wholly inserted into a user's ear in use like a hearing aid, and this microphone amplifier has a cylindrical main body 2 with a microphone 3 for collecting weak voice and sound provided at a central portion of the front surface which is one edge face of the main body, and further a speaker 5 is provided on a small diameter portion projecting from a central portion of the back surface in the opposite side. The reference numeral 6 indicates a battery.

Fig. 2 is a block diagram showing the oscillation prevention circuit and other related components incorporated in the microphone amplifier 1, and components not necessary for explanation herein such as the battery 6 are omitted from this figure. The reference numeral 8 indicates a first amplifier circuit, while the reference numeral 9 indicates a second amplifier circuit, and in this figure, the amplifier circuit 8 is connected to the microphone 3 and the amplifier circuit 9 is connected to the speaker 5. A charging switch circuit 11 and a transfer switch circuit 12 are provided in series between these two amplifier circuits, and the charging switch circuit 11 is connected to the amplifier circuit 8, while the transfer switch circuit 12 is connected to the amplifier circuit 9. A capacitor 13 as a transitional signal storage member is provided between the charging switch circuit 11 and the transfer switch circuit 12. The charging switch circuit 11 delivers a signal such as a transitional value of an audio output voltage from the amplifier circuit 8 to the capacitor 13 by charging, and the transfer switch circuit 12 delivers the signal such as the charged voltage from the capacitor 13 to the assessment method 9. With this configuration, the amplifier circuit 9 drives the speaker 5.

Connected to the charging switch circuit 11 and to the transfer switch circuit 12 is a control circuit 15 which drives and controls ON/OFF operations of these two switches by generating a clock pulse. The control circuit 15 comprises switch drive circuits 16, 17, a flip-flop circuit 18, and an oscillation circuit 19. The switch drive circuit 16 is connected to the charging switch circuit 11, while the switch drive circuit 17 is connected to the transfer switch circuit 12. The flip-flop circuit 18 is connected to the two switch drive circuits 16, 17, and the two switch drive circuits are controlled so that the transfer switch circuit 12 is turned OFF when the charging switch circuit is ON and is turned ON when the charging switch circuit 11 is OFF to prevent the two switch circuits 11, 12 from being turned ON at the same time. Fig. 3 shows switch timing for the two switch circuits 11, 12. Further the oscillation circuit 19 is connected to the flip-flop circuit 18 to make the flip-flop circuit 18 operate.

In actual use, the microphone amplifier 1 is set in the stand-by state by turning a switch (not shown) ON, and the main body 2 is set in an ear so that the projecting section is inserted into the ear hole in the state. When a sound is provided from the outside, the sound is collected by the microphone 3, and the sound is sent from the amplifier circuit 8 to the charging switch circuit 11. This charging switch circuit 11 is turned ON or OFF according to a repetitive frequency from the control circuit 15 which can not be recognized as a human voice such as a pulse wave with the frequency in the range from 30 to 50 KHz, and a signal sent to the charging switch circuit 11 when the charging switch circuit 11 is ON is written and stored in the capacitor 13 when the capacitor 13 is charged. Then this stored signal is transferred to the amplifier circuit 9 when the transfer switch circuit 12, which is similarly turned ON/OFF by the control circuit 15 is ON. As shown in Fig. 3, ON/OFF control is provided by the control circuit 15 so that the transfer switch circuit 12 is turned OFF when the charging switch circuit 11 is ON and the transfer switch circuit 12 is turned ON when the charging switch circuit 11 is OFF, and the time when the charging switch circuit 11 is kept ON never overlaps the time when the transfer switch circuit 12 is ON. The signal amplified by the amplifier circuit 9 is amplified as a sound through the speaker 5.

With the operations described above, one-way communication can be performed. In this configuration, the microphone 3 and the speaker 5 are very close to each other, so that the sound made louder by the speaker 5 is picked up by the microphone 3, and the loop formed by a signal flow as indicated by the dotted line in Fig. 2 is formed to cause oscillation phenomenon, but a loop is not generated in the signal flow because of the ON/OFF control as described above by the control circuit 15 over the charging switch circuit 11 and the transfer switch circuit 12, and oscillation phenomenon never occurs. Especially, different from the conventional technology, gain adjustment or the like for preventing oscillation is not required, so that oscillation never occurs however loud the sound volume is made. Because of this feature, a configuration circuit especially required for gain adjustment or the like and power consumed in the gain adjustment circuit are not necessary, which contributes to substantial reduction of production cost as well as operation cost.

In the operation sequence described above, at first the oscillation circuit 19 is operated to prevent the control circuit 15 controlling ON/OFF of the two switch circuits 11, 12 from losing the stability, and after the control for suppression of oscillation is enabled, all of the circuits including the amplifier circuit 8 are set in the stand-by state. When the power is turned OFF, the operation sequence is contrary to that described above.

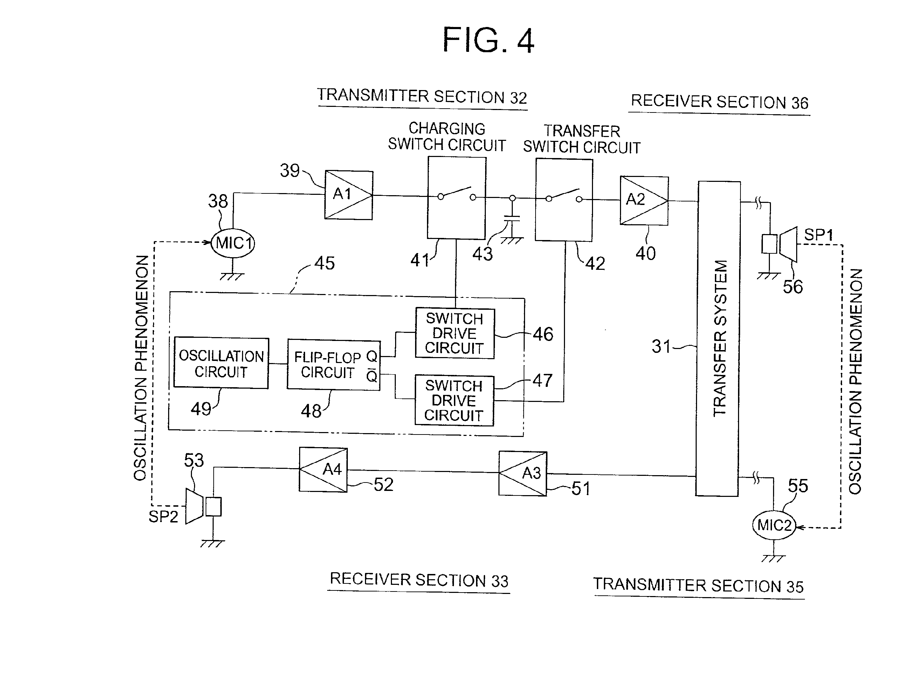

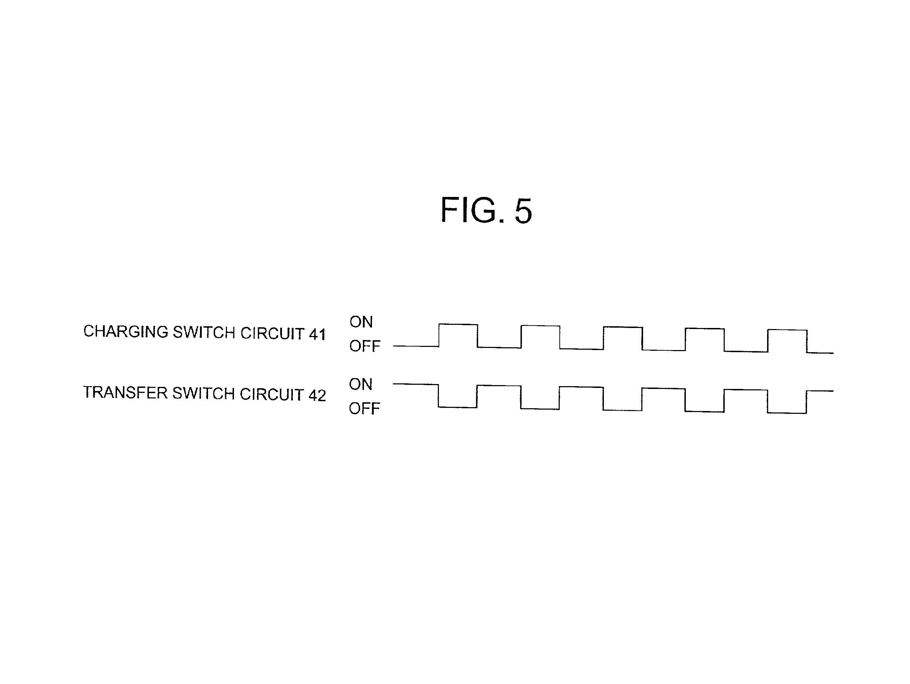

Fig. 4 and Fig. 5 show a second embodiment of the present invention in which the present invention is applied to a transmitter-receiver as a slave device for a mobile-phone for interactive communication. The environment in which this transmitter-receiver is used is generally as shown in the block diagram in Fig. 4, and although not shown in this figure, also in this embodiment, the transmitter-receiver is partially or wholly inserted into an ear hole like the microphone amplifier 1. The reference numeral 31 indicates a transmission system including a mobile-phone or a radio wave relay section, and the section on the left side of the transmission system shows a transmitter section 32 and a receiver section 33 each provided in a transmitter/receiver section of a transmitter-receiver as a slave device for the mobile-phone, for instance, in the transmitting side, and the section on the right side therefrom shows a transmitter section 35 and a receiver section 36 each provided in a transmitter/receiver section of a communication apparatus used in the receiving side. The transmitter section 32 in the transmitting side comprises a microphone 38, a first amplifier circuit 39 connected to the microphone 38, and a second amplifier circuit 40 connected to the transmission system 31. A charging switch circuit 41 and a transfer switch circuit 42 are provided in series between the two amplifier circuits, and the charging switch circuit 41 is connected to the amplifier circuit 39, while the transfer switch circuit 42 is connected to the amplifier circuit 40. A capacitor 43 is provided as a transitional signal storage member between the charging switch circuit 41 and the transfer switch circuit 42. The charging switch circuit 41 delivers a signal such as a transitional value of an audio output voltage from the amplifier circuit 39 to the capacitor 43 by charging it, while the transfer switch circuit 42 delivers a signal such as a charging voltage charged from the capacitor 43 to the amplifier circuit 40.

Connected to the charging switch circuit 41 as well as to the transfer switch circuit 42 is a control circuit 45 for driving and controlling these two switch circuits by generating a clock pulse to alternately turn ON and OFF these switch circuits. The control circuit 45 comprises switch drive circuits 46, 47, flip-flop circuit 48, and an oscillation circuit 49. The switch drive circuit 46 is connected to the charging switch circuit 41, while the switch drive circuit 47 is connected to the transfer switch circuit 42. The flip-flop circuit 48 is connected to the two switch drive circuits 46, 47, and provides ON/OFF control for the two switch drive circuits so that the transfer switch circuit 42 is turned OFF when the charging switch circuit 41 is ON and the transfer switch circuit 42 is turned ON when the charging switch circuit 41 is OFF to prevent the two switch circuits 41, 42 from being turned ON at the same time. Fig. 5 shows switch timing for the two switch circuits 41, 42. Further the oscillation circuit 49 is connected to the flip-flop circuit 48 to make the flip-flop circuit 48 operate. The receiver section 33 in the transmitting side comprises a third amplifier circuit 51 connected to the transmission system 31, a fourth amplifier circuit 52 connected to the amplifier circuit, and a speaker 53 connected to the amplifier circuit. As for the transmitter section 35 and the receiver section 36 in the receiving side, only the portion thereof is shown, and such components as the amplifier circuit are not shown in this figure. Namely, the transmitter section 35 in the receiving side has a microphone 55, and the receiver section 36 therein has a speaker 56.

When used, a switch amplifiers is turned ON to set the transmitter-receiver in the stand-by state, and in this state, the sound collected by the microphone 38 in the transmitter section 32 is sent from the amplifier circuit 39 to the charging switch circuit 41. In this step, the charging switch circuit 41 is turned ON or OFF by the control circuit 45 according to a repetitive frequency not recognized as a human voice, for instance, a pulse wave having the frequency in the range from 30 to 50 KHz, and a signal sent, when the charging switch circuit 41 is ON, to the charging switch circuit 41 is written and stored in the capacitor 43 when the capacitor 43 is charged. Then, this stored signal is transferred, when the transfer switch circuit 42 also under ON/OFF control by the control circuit 45 is ON, to the amplifier circuit 40. As shown in Fig. 5, control is provided by the control circuit 45 so that the transfer switch circuit 42 is turned OFF when the charging switch circuit 41 is ON and the transfer switch circuit 42 is turned ON when the charging switch circuit 41 is OFF, and therefore the time when the charging switch circuit 41 is kept ON never overlaps the time when the transfer switch circuit 42 is ON. Further, when the signal transferred to the amplifier circuit 40 is sent to the transmission system 31, a switching component loaded in the transfer switch circuit 40 is removed by a filter added to the amplifier circuit 40 or the like, and is amplified by the amplifier circuit 40 before the signal is transmitted to the transmission system 31. The signal transmitted through the transmission system 31 is made louder as a sound by the speaker 56 in the receiver section 36 of a mobile-phone or a receiver in the receiving side. On the other hand, the receiving side hearing this sound sends the sound through the microphone 55 in the transmitter section 35 to the transmission system 31. The signal sent from the transmission system 31 is made louder as a sound by the speaker 53 through the amplifier circuits 51, 52 in the receiver section 33.

With this configuration, interactive communication can be performed. In this configuration, as the microphone 38 in the transmitter section 32 and the speaker 53 in the receiver section 33 are very close to each other, the voice and sound made louder by the speaker 53 are fetched into the microphone 38, then the voice and sound transferred through the transmission system 31 and amplified by the speaker 56 in the receiving side are fetched into the microphone 55 in the receiving side, and the loop as indicated by the dotted line in Fig. 4 is formed to cause oscillation phenomenon. However, because of ON/OFF control by the control circuit 45 over the charging switch circuit 41 and transfer switch circuit 42, a loop is not formed in the signal flow like in the case of the microphone amplifier 1 described in the first embodiment, thus oscillation phenomenon is prevented.

With the configuration described above, when the receiving side is a normal mobile-phone or a telephone set having no oscillation prevention circuit function like in this embodiment, no problem occurs in the interactive communication. However, when the same oscillation prevention circuit function has been installed, if the control timing frequencies of oscillation prevention circuits in the two communication apparatuses are identical or only sightly different, a communication fault may occur. In this case, it is required to remove the switching component in the receiving side with a filter in the receiving side, like in the case described above, before the signal such as voice and sound is transmitted to the transmission system 31.

In the case described above, to prevent the control circuit 45 providing ON/OFF control over the two switch circuits 41, 42 from losing the stability when power for the transmitter-receiver is turned ON, the oscillation circuit 49 is operated first. After control for prevention of oscillation is enabled, all of the circuits in the transmitter/receiver circuit including the transmitter section 32 comprising the amplifier circuit 39 and the receiver section 33 comprising the amplifier circuit 51 are set in the stand-by state. The operation sequence is contrary, when the power is turned OFF.

In this embodiment, the charging switch circuit 41 and transfer switch circuit 42 are provided in series between the first amplifier circuit 39 and the second amplifier circuit 40 in the transmitter section 32. Further the capacitor 43 is provided between the charging switch circuit 41 and the transfer switch circuit 42. Alternatively, the configuration is allowable in which the charging switch circuit 41 and the transfer switch circuit 42 are provided in series between the third amplifier circuit 51 and fourth amplifier circuit 52 in the receiver section 33 and the capacitor 43 is provided between the charging switch circuit 41 and the transfer switch circuit 42. In this case, the switch drive circuit 46 of the control circuit 45 is connected to the charging switch circuit 41 with the switch drive circuit 47 connected to the transfer switch circuit 42, and the charging switch circuit 41 and the transfer switch circuit 42 are driven and turned ON or OFF by generating clock pulses.

In the first embodiment, the speaker 5 is used, but this is only an example, and for instance, an earphone may be used. In addition, the capacitors 13, 43 are used as transitional signal storage members in the first and second embodiments, but it is not always required to use capacitors, and any other elements or circuits may be used on the conditions that they have a memory function. Further the control circuits 15, 45 are only preferred examples, and other circuits may be employed on the condition that the same effect is achieved.

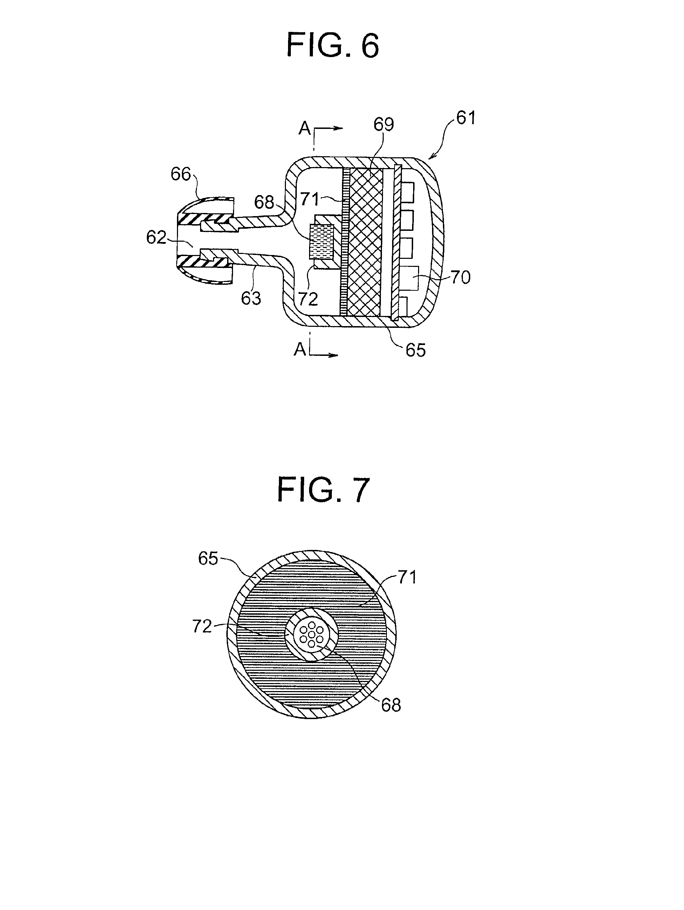

Figs. 6 to 9 respectively show a case where the oscillation prevention circuit described above is applied to an earphone microphone. The reference numeral 61 indicates an earphone microphone, and the earphone microphone has a hollow main body 65 with an inserting section 63 having an opening 62 adapted to be inserted into an ear hole. The main body 65 is made from soft synthetic resin, and has a substantially cylindrical form with a round side face. There is no opening other than the opening 62 in the inserting section 63, and the inside is a sealed hollow section. The inserting section 63 projects from a central portion of the side face of the main body 65, and the tip section is made from an elastic member such as rubber with a fit section 66 adapted to be fit to any size of ear hole (auditory meatus).

Such components as a microphone 68 for picking up an audio signal propagating as vibration of air from the auditory meatus via the opening 62 of the inserting section 63 , a speaker 69, and a radio circuit 70 with an oscillation prevention circuit are accommodated inside the main body 65. Namely the oscillation prevention circuit described in relation to the second embodiment and shown in Fig. 4 is incorporated in the radio circuit 70. Provided at a substantially central position inside the main body 65 facing against the opening 62 of the inserting section 63 is a speaker 69. The microphone 68 is provided at a center of a speaker protection film 71 provided in the side of the opening 62 (at a central portion of the speaker 69), facing against a substantially central portion of the opening 62, with the outer peripheral surface and bottom surface covered with an sound absorption member 72. The sound absorption member 72 also has a function to partition the speaker 69 from the microphone 68 to prevent direct transmission of mechanical vibration of the speaker 69 to the microphone 68.

The radio circuit 70 comprises an assembly of various types of electronic parts each constituting a circuit on a substrate. It transmits an audio signal fetched from the microphone 68 to an external transmitter-receiver not shown in the figure, or receives an audio signal from the external. The received audio signal is amplified by the speaker 69. As the external transmitter-receiver, for instance, a mobile communication apparatus such as a mobile-phone, a terminal device for communication, or a dedicated transmitter-receiver for an earphone microphone set therein or external attached thereto is used. The main body 65 is made from a material similar to the sound absorption material 72 so that the microphone can pick up only an audio signal propagating thereto from the auditory meatus.

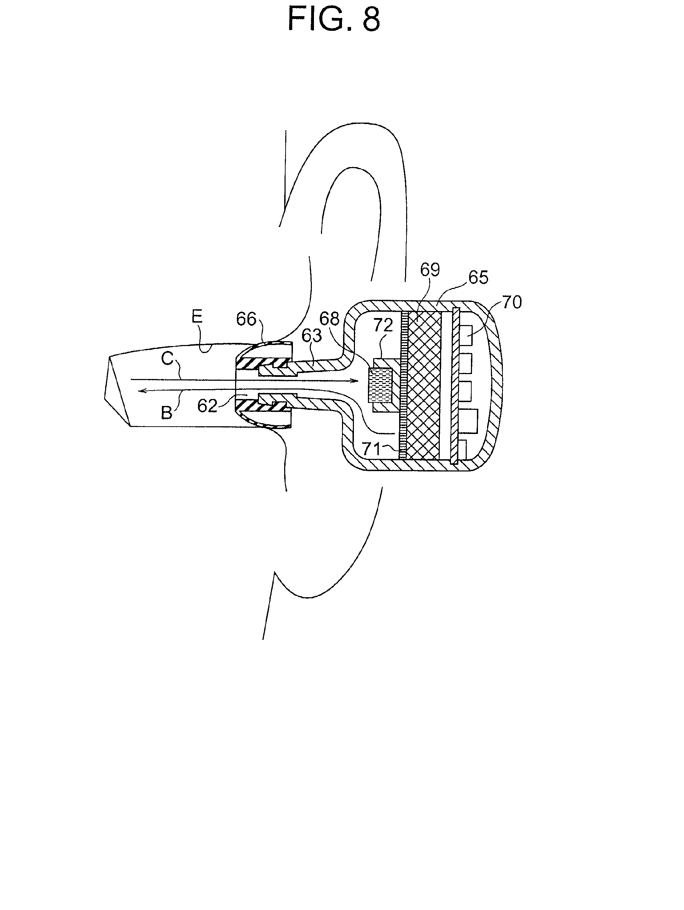

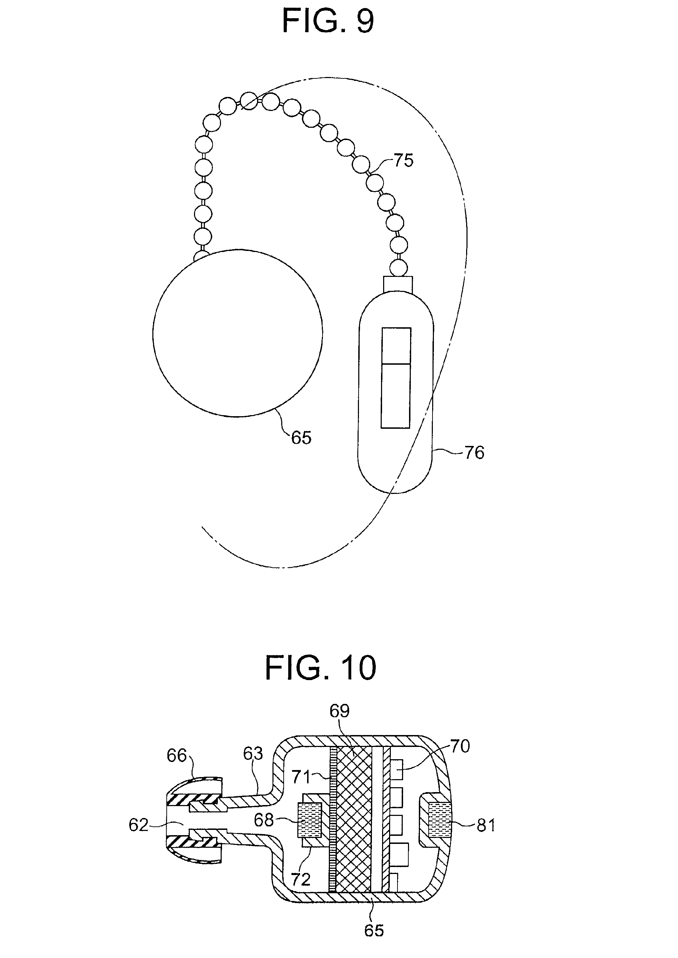

The operations above are described below. At first, the inserting section 63 of the earphone microphone 61 is inserted into an auditory meatus E of either a left ear or a right ear for setting. Fig. 8 shows the state where the earphone microphone 61 has been set in the ear. When interactive communication is to be performed without using any hand, in addition to insertion of the inserting section 63 shown in Fig. 9, a chain 75 with an ear hang clip attached to the main body 65 is set over the ear with the clip set on the back side of the ear. By using this chain 75, it is possible to set the chain 75 on either a left or right ear under stable conditions with the clip 76 having a certain weight.

In receiving, an audio signal transmitted from an external transmitter-receiver is received by the radio circuit 70 provided inside the main body 65 of the earphone microphone 61, is amplified through the speaker 69, propagates in the direction indicated by the arrow B in Fig. 8, and is delivered as a voice. Then the voice is also picked up by the microphone 68 provided at a central portion of the speaker 69, but the oscillation loop is cut because of control by the oscillation prevention circuit provided in the radio circuit 70, so that oscillation phenomenon never occurs. Further, as the microphone 68 is partitioned from the speaker 69 with the sound absorption member 72, so that, when the voice is picked up from the speaker 69, noises or the other sounds caused mechanical vibration of the speaker 69 are never picked up. Therefore, a time-lag caused by transmission of the audio signal from the speaker 69 to the microphone 68, which is troublesome in the conventional technology, is substantially reduced. Although the oscillation prevention circuit is provided in the radio circuit 70 in this embodiment, the oscillation prevention circuit may be provided in the external transmitter-receiver described above.

When transmitting an audio signal, the audio signal generated in a vocal cord and propagating as vibration of air from the drum membrane through the auditory meatus E propagates in the direction indicated by arrow C in Fig. 8 and is picked up by the microphone 68, and then is transmitted and delivered by the radio circuit 70 to an external transmitter-receiver. When picking up the audio signal, the fit section 66 closely adheres to the auditory meatus E, so that an audio signal propagating through bones is absorbed in the fit section 66 and the delivery is suppressed.
Because of this feature, the most of audio signals propagating through bones can be ignored. In addition, because of close adhesion of the fit section 66, sounds from the outside can effectively be interrupted, and the earphone microphone 61 is set under very stable conditions. Therefore, the earphone microphone 61 sensitively responds only to the audio signals propagating from the auditory meatus E, and the time-lag of audio signals caused by a difference in the propagation method, which has been a troublesome problem in the conventional technology, is substantially reduced. As for the signal transaction between the earphone microphone 61 and an external transmitter-receiver, no problems occur in radio communication nor in cabled communication, and interactive communication is possible in either case.

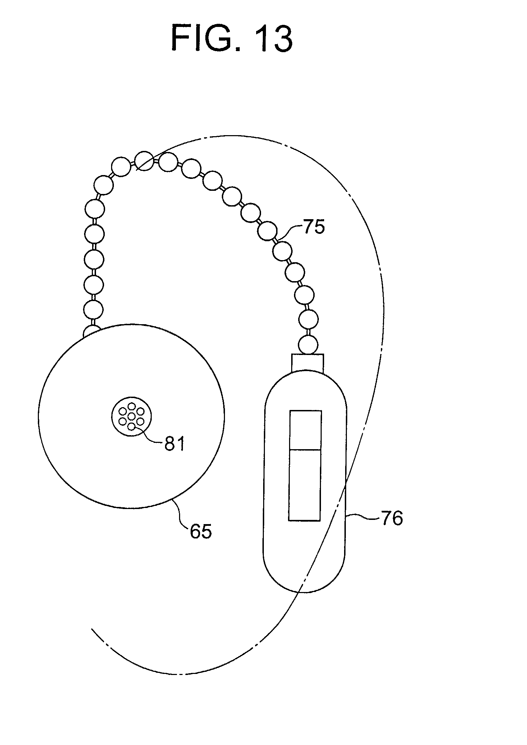

Figs. 10 to 13 each shows an example in which the oscillation prevention circuit described above is applied to an earphone microphone with a hearing aid function. The configuration excluding the hearing aid function is the same as that in Fig. 4, so that the same reference numerals are assigned to the same components and detailed description thereof is omitted herefrom. The reference numeral 81 indicates a second microphone, and is provided in a recessed section at a central portion of the external surface of the main body 65 facing against the microphone 68. This microphone 81 picks up an audio signal propagating as vibration of air from the outside. Although not shown in the figure, in this example, a circuit providing ON/OFF control over the second microphone 81 and the microphone 68 is incorporated therein, so that the second microphone 81 is turned ON with the microphone 68 turned OFF when the earphone microphone 61 is not in the communicating mode and the second microphone 81 is turned OFF with the microphone 68 turned ON when the earphone microphone 61 is in the communicating mode. Specifically the ON/OFF control is performed by controlling ON and OFF of a switch of each microphone.

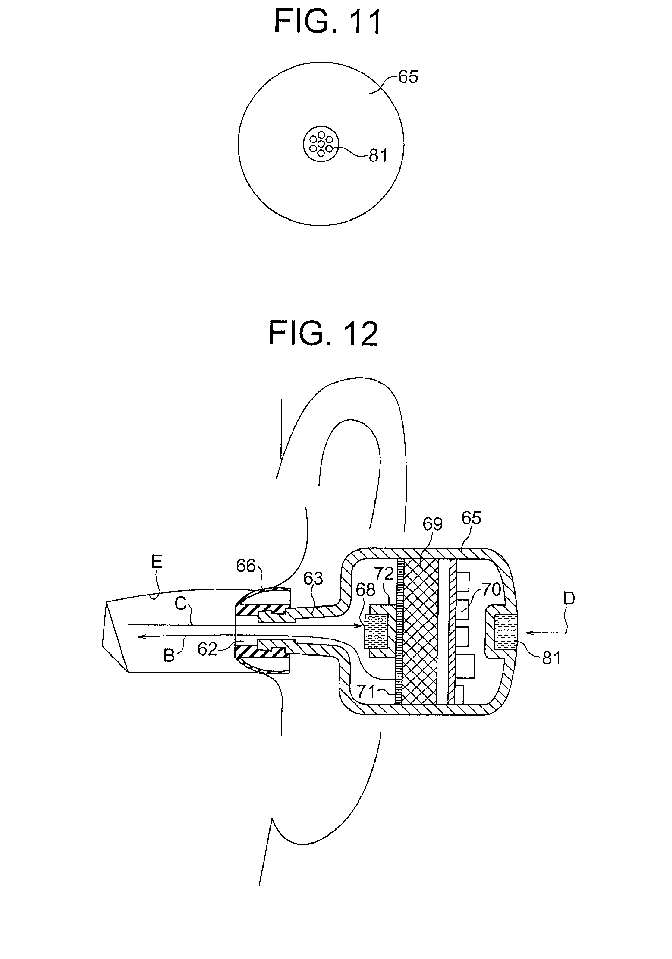

Namely, normally(in the not-communicating state), audio signals from the outside are picked up by the second microphone 81 as indicated by the arrow D in Fig. 12 and are amplified through the speaker 69, and then propagate in the direction indicated by the arrow B in Fig. 12, and are delivered as voice and sound. The external voice and sound are delivered as described above; thus the hearing aid function is achieved. When the audio signal transmitted from the external transmitter-receiver is received by the radio circuit 70, the second microphone 81 is turned OFF with the microphone 68 turned ON by the control circuit, and thus interactive communication is enabled, and transmission and receiving of audio signals can be performed like in the case shown in Fig. 8. When transaction of audio signals is terminated and communication is disabled, the second microphone 81 is turned ON with the microphone 68 turned OFF by the control circuit, and the hearing aid function is enabled again.

If it is not necessary to use the earphone microphone 61 when communication is over, in the stand-by mode for communication, or when the hearing aid function is not used, the inserting section 63 of the earphone microphone 61 is pulled off the auditory meatus E and the earphone microphone 61 is removed from the ear. In that case, it is preferable and convenient for storage to put the earphone microphone 61 in a chest pocket or on the inner surface of a collar and to fit the clip 76 of the chain 75 with a ear hang clip on an edge of the pocket or the collar.

With the configuration as described above, even in a case where a microphone and a speaker are provided side by side for integration, time-lag caused by propagation from the speaker to the microphone and also time-lag caused by a difference in the propagation method can substantially be suppressed. Therefore interactive communication can be performed like natural oral communication.

In this example, a diameter of the main body 65 is larger than that of the inserting section 63, but the configuration is not limited to this one, and a diameter of the main body 65 may be substantially equal to that of the inserting section 63. Further shapes and structures of components of the main body 65 shown in the figure are only illustrative, and it is needless to say that the design may freely be changed according to the necessity.

## Claims

1. An oscillation prevention circuit used in a microphone amplifier for one-way communication having a microphone (3), a first amplifier circuit (8), a second amplifier circuit (9), and a speaker (5) or an earphone, wherein a charging switch circuit (11) and a transfer switch circuit (12) are provided in series between said first amplifier circuit (8) and said second amplifier circuit (9); a transitional signal storage member (13) is provided between the charging switch circuit and the transfer switch circuit; said charging switch circuit (11) delivers a signal from the first amplifier circuit (8) to the transitional signal storage member (13); said transfer switch circuit (12) delivers the signal from the transitional signal storage member (13) to the second amplifier circuit (9); and **characterized in that** a control circuit (15) is provided which provides controls so that the transfer switch circuit (12) is turned OFF when the charging switch circuit (11) is ON and the charging switch circuit (11) is turned OFF when the transfer switch circuit (12) is ON to prevent both of the two switch circuits from being turned ON at the same time.

2. The oscillation prevention circuit according to claim 1, wherein the microphone amplifier (1) is partially or wholly inserted in use into an ear hole like a hearing aid.

3. An oscillation prevention circuit used in a transmitter-receiver for interactive communication having a transmitter section comprising a microphone (38), a first amplifier circuit (39), a second amplifier circuit (40) and a receiver section (33) comprising a third amplifier circuit (51), a fourth amplifier circuit (52), and a speaker (53), wherein a charging switch circuit (41) and a transfer switch circuit (42) are provided in series between the first and second amplifier circuits, or between the third and fourth amplifier circuits; a transitional signal storage member (43) is provided between the charging switch circuit and the transfer switch circuit; said charging switch circuit (41) delivers a signal from the first amplifier circuit (39) or the third amplifier circuit (51) to the transitional signal storage member (43); said transfer switch circuit (42) delivers a signal from the transitional signal storage member (43) to the second amplifier circuit (40) or the fourth amplifier circuit (52); and **characterized in that** a control circuit (45) is provided which provides controls so that the transfer switch circuit (42) is turned OFF when the charging switch circuit (41) is ON and the charging switch circuit is turned OFF when the transfer switch circuit is ON to prevent both of the two switch circuits from being turned ON at the same time.

4. The oscillation prevention circuit according to claim 3, wherein the transmitter-receiver is partially or wholly inserted in use into an ear hole like a hearing aid.

5. The oscillation prevention circuit according to any preceding claim, wherein the transitional signal storage member is a capacitor (13, 43).

6. The oscillator prevention circuit according to any preceding claim, wherein said control circuit (15) comprises a first switch drive circuit (16) for driving said charging switch circuit (11), a second switch drive circuit (18) for alternately turning ON and OFF the first and second switch driving circuits to prevent these two switch circuits from being turned ON at the same time, and an oscillation circuit (19) for making this flip-flop circuit operate.

7. The oscillation prevention circuit according to claim 3 or any of claims 4 to 6 when dependent thereon, wherein the transmitter-receiver is an earphone microphone (61) having a hollow main body (65) having an inserting section (63) with an opening (62) formed with a size adapted to an ear hole and enabling interactive communication with an external transmitter-receiver when the inserting section of said main body is dismountably set in an ear hole.

8. The oscillation prevention circuit according to claim 7, wherein said earphone microphone has a microphone (68) picking up audio signals propagating as air vibration from inside of an ear hole via an opening of the inserting section; and a speaker (69) for amplifying audio signals received from an external transmitter-receiver in the main body, and further wherein this speaker is provided at a position opposite to the opening of the inserting section and is facing the opening; a central section of said microphone is provided at a position nearer to the opening of the inserting section than to the speaker and is substantially facing a center of said opening; and the microphone and the speaker are partitioned with a sound absorbing material so that mechanical vibration of the speaker is not directly delivered to the microphone.

9. The oscillation prevention circuit according to claim 8, wherein the earphone microphone has a second microphone (81) for picking up audio signals propagating through air from the outside provided on the external surface.

10. The oscillation prevention circuit according to claim 9, wherein ON/OFF control for the second microphone (81) and the microphone is provided so that the second microphone is turned ON and the microphone is turned OFF when the earphone microphone is not in the communication mode, and the second microphone is turned OFF and the microphone is turned ON when the microphone is in the communication mode.
